# EUROPEAN PATENT APPLICATION

(11) **EP 4 740 719 A1**
(43) Date of publication of application: **13.05.2026**
(21) Application number: 25213713.8
(22) Date of filing: 05.11.2025
(51) Int. Cl.: A01D 34/00, A01D 34/68, A01D 34/78

(54) **POWER TOOL MOTOR CONTROL AND METHODS ASSOCIATED THEREWITH**

(30) Priority: 06.11.2024 US 202463717071 P
(71) Applicant: Techtronic Cordless GP, Anderson, SC 29621 (US)
(72) Inventor: GIVENS, Robert T., Anderson, 29621 (US); WILSON, Jeff, Anderson, 29621 (US); HOOD, Adam, Anderson, 29621 (US); DILELLA, Jesse, Anderson, 29621 (US)
(74) Representative: Zimmermann & Partner Patentanwälte mbB

(57) **Abstract**

A power tool including an implement driven by a motor; an inertial measurement unit; and a control circuitry in communication with the motor and IMU, wherein the control circuitry: receives motor data associated with a condition of the motor; determines angular change of the power tool from motion data received from the IMU or receives angular change data from the IMU; initiates a countdown timer in response to the condition of the motor reaching a threshold; and generates a control instruction to maintain power to the motor upon the countdown timer reaching a prescribed value if the angular change is greater than an angular change threshold at any time during a duration of the countdown timer and reduce power to the motor upon the countdown timer reaching the prescribed value if the angular change is less than the angular change threshold during an entire duration of the countdown timer.

## Description

### CROSS-REFERENCE TO RELATED APPLICATIONS

The present application claims priority to U.S. Provisional Patent Application 63/717,071, filed on November 6, 2024, the disclosure of which is incorporated by reference herein in its entirety.

### FIELD

The present disclosure relates generally to controlling power to a motor of a power tool in view of one or more detected conditions associated with the motor.

### BACKGROUND

Traditionally, yard work was performed using manual tools which were moved by human power to perform a work operation. Over time, manual tools became replaced by power tools. Power tools generally include at least one motive device which drives one or more working implements to perform the work operation. Several types of motive devices have been used to drive the working implement, including gas-powered engines and, more recently, electric motors.

Many power tools operate bimodally - on or off. For example, lawnmowers typically include a cutting blade driven by a motor or engine. The speed of the motor or engine is typically fixed such that the cutting blade is driven at a fixed rotational speed. As such, the motor is provided with a generally constant amount of power regardless of active need. This can result in the power supply (either a battery or fuel source) prematurely depleting. To extend the life of the power supply, it may be possible to utilize a multi-modal controller which allows the motive device to receive a more suitable power based on active need. However, the multi-modal controller may affect power savings modes in instances where the user desires to maintain high powered operations.

Accordingly, improved power tool motor control systems and methods are desired in the art. In particular, power tool motor control systems and methods that provide smart power control, particularly during known instances where a user may desire higher power output from their power tool, would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a power tool is provided. The power tool includes a working implement driven by a motor; an inertial measurement unit (IMU); and a control circuitry in electronic communication with the motor and the IMU, wherein the control circuitry comprises a processor coupled to a memory storing instructions which, when executed by the processor, cause the control circuitry to: receive a motor data associated with a condition of the motor; determine angular change of the power tool from motion data received from the IMU or receive angular change data from the IMU; initiate a countdown timer in response to the condition of the motor reaching a condition threshold; and generate a control instruction to: maintain power to the motor upon the countdown timer reaching a prescribed value if the determined angular change is greater than an angular change threshold at any time during a duration of the countdown timer, or reduce power to the motor upon the countdown timer reaching the prescribed value if the determined angular change is less than the angular change threshold during an entire duration of the countdown timer.

In accordance with another embodiment, a method of controlling a working implement of a power tool by control circuitry in communication with a motor driving the working implement is provided. The method includes initiating, by the control circuitry, a countdown timer in response to a condition of the motor reaching a condition threshold, wherein the control circuitry is configured to generate a control instruction to change power to the motor upon the countdown timer reaching a prescribed value; determining, by the control circuitry or an inertial measurement unit (IMU) coupled to the power tool, an angular change of the power tool based on the motion data captured by the IMU; comparing the angular change to an angular change threshold; and overriding, by the control circuitry, the control instruction based on the comparing.

In accordance with another embodiment, a control circuitry for a power tool is provided. The control circuitry includes a processor coupled to a memory storing instructions which, when executed by the processor cause the control circuitry to: receive motor data associated with a condition of a working implement motor of the power tool; determine angular change of the power tool from motion data received from an inertial measurement unit (IMU) of the power tool or receive angular change data from the IMU; initiate a countdown timer in response to the condition of the working implement motor reaching a condition threshold, wherein the control circuitry is configured to generate a control instruction to reduce power to the working implement motor upon the countdown timer reaching a prescribed value; compare the determined angular change to an angular change threshold; and override the control instruction based on the comparison.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a lawnmower in accordance with embodiments of the present disclosure;
FIG. 2 is a schematic of the lawnmower in accordance with embodiments of the present disclosure;
FIG. 3 is a flow chart of a method of controlling a motor of the lawnmower in accordance with embodiments of the present disclosure;
FIG. 4 is a top view of a working environment with the lawnmower travelling within the working environment in accordance with embodiments of the present disclosure;
FIG. 5 is a graph of current draw associated with a motor of the lawnmower and a graph of angular change of the lawnmower in accordance with embodiments of the present disclosure; and
FIG. 6 is a flow chart of a method of controlling a motor of the lawnmower in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, power tools described herein exhibit power saving benefits by allowing control circuitry to automatically reduce power output to a working implement motor of the power tool when power supplied to the working implement motor is unnecessarily high. For example, lawnmowers may be tasked with cutting lawns ranging in state from thick to thin with grass ranging in condition from tall to short. The thicker and/or taller the grass is at the time of cutting, the greater the power required to achieve a desirable cut. Conversely, the thinner and/or shorter the grass is at the time of cutting, the less power is required to achieve the same desirable cut. Lawnmowers described herein may automatically adjust power output to the working implement motor based on one or more detected conditions in order to increase power savings when less power is required to achieve a desirable cut.

By way of non-limiting example, the detected condition(s) can include current draw, voltage, power, motor speed, motor temperature, torque, position data, duty cycle, or the like. These conditions either directly detect, or permit detection, of instances where the motor is operating at a power output greater than required to perform a working operation. Reference hereinafter is made to current draw and motor speed; however, other conditions (and further conditions not listed herein) may also, or alternatively, be used in accordance with embodiments described herein.

When current draw of the working implement motor is below a prescribed threshold value, the control circuitry can reduce power output to the working implement mower to a low-power output in order to save power and extend battery life. Conversely, when current draw of the working implement motor is above the prescribed threshold value, the control circuitry can maintain the power output at a normal (elevated) working condition.

Alternatively, or in addition, when speed of the working implement motor is above a prescribed threshold value (e.g., as a result of thinner and/or shorter grass), the control circuitry can reduce power output to the working implement motor. Conversely, when speed of the working implement motor is below the prescribed threshold value, the control circuitry can increase or maintain power output to the working implement motor.

In some implementations, the control circuitry may initiate (trigger) a countdown timer upon detecting the condition which warrants reduced power output to the working implement motor (i.e., when the detected condition reaches and/or exceeds a prescribed threshold value associated with the condition). For example, the countdown timer may be initiated in response to current draw falling below a prescribed current draw threshold as a result of the lawnmower traversing over an area having relatively thinner (less dense) and/or shorter grass. The countdown timer can be, for example, an interval timer with an interval duration of one (1) second, one and one half (1.5) seconds, two (2) seconds, two and one half (2.5) seconds, five (5) seconds, seven (7) seconds, ten (10) seconds, or the like. The control circuitry can cause the working implement motor to maintain current power output until the timer countdown expires. After (e.g., upon) expiration of the timer countdown, the control circuitry can reduce power output to the working implement motor. Use of the countdown timer prevents the control circuitry from rapidly switching between power modes in response to rapidly fluctuating conditions. For example, mowing in a working environment having some patches of thin, short grass surrounded by other patches of thick, taller grass may cause the lawnmower to rapidly switch between the low-power mode (e.g., when the lawnmower is at one of the thin patches of grass) and the regular power mode (e.g., when the lawnmower is at one of the thick patches of grass). The timer countdown mitigates this rapid switching by requiring that the condition be present for the entire duration of the countdown timer. In this regard, low-power mode is only entered into when necessary and the user is spared the experience of constantly waiting for the lawnmower to ramp back to regular power mode.

One example instance where use of the countdown timer may not be sufficient to mitigate undesirable reduction of output power to the working implement motor includes where the power tool is actively turning. For example, lawnmowers must be turned when they reach an outer boundary of a working environment. In most cases, the user pivots the lawnmower onto rear wheels to initiate the turn. With the lawnmower on its rear wheels, the cutting implement is raised above the level of the grass, resulting in relatively unobstructed (free spinning) of the cutting implement. The resulting current draw data may signal a light cutting condition. As a result, the countdown timer may be triggered and reach zero just as the user is preparing to move the lawnmower across a new patch of (e.g., thick) grass. As a result, the lawnmower may stall or become bogged down in the thick grass. This forces the user to undesirably slow down coming out of every turn or results in poor or insufficient cutting of the initial patch of grass encountered after the turn.

Power tools described herein may override the countdown timer based on secondary data. For example, the power tool may include an inertial measurement unit (IMU) including an accelerometer and/or a gyroscope or other motion sensors such as camera or time-of-flight sensors. The IMU can generate secondary (motion) data which is used to determine when the power tool is turning. In the case where a turn is indicated by the motion data, the control circuitry is prevented from adjusting the working implement motor into the low-power mode, effectively overriding the low-power mode logic described above. In this regard, the incurrence of turning does not require the user to slow down coming out of turns or result in poor or insufficient cutting of the initial patch of grass encountered after the turn.

In some implementations, the IMU communicates motion data to the control circuitry which, in turn, determines when a turn is occurring. In other implementations, the IMU can at least partially, or even fully, determine when the power tool is turning and communicate a signal to the control circuitry when a turn is detected. For example, the IMU can include an integral programmable logic or machine-learning capability which permits the IMU to analyze captured motion data and detect turning of the power tool. The IMU can communicate with the control circuitry when the turn is detected to permit operation of the power tool based, at least in part, on the turning determination.

To maximize accuracy using the motion data, angular change threshold value(s) may be implemented. The angular change threshold value(s) represent thresholds over which a turn is to be recognized and below which a turn is not recognized. For example, the user may move the lawnmower in long sweeping curves, circles, arcs, or a zigzag pattern when putting stripes on the lawn. The angular change threshold may be set such that the angular change exhibited by these patterns does not trigger recognition of a turn.

The angular change may correspond to detected changes to angular velocity, angular acceleration, angular jerk, or the like. When the motion data indicates a turn that has an angular change less than the angular change threshold value, the countdown timer is not overridden and the control circuitry may initiate adjustment of the working implement motor to the low-power mode. However, when the motion data indicates that a turn has an angular change greater than (or, in some embodiments, equal to) the angular change threshold value, the countdown timer is overridden and the control circuitry is prevented from initiating adjustment of the working implement motor to the low-power mode. In this regard, the dual mandates of cutting efficiency and battery efficiency are optimized to create a more ideal power tool which is more desirable and enjoyable for the user to operate without stalling or bogging down when coming out of turns or requiring the use to slow down each turn.

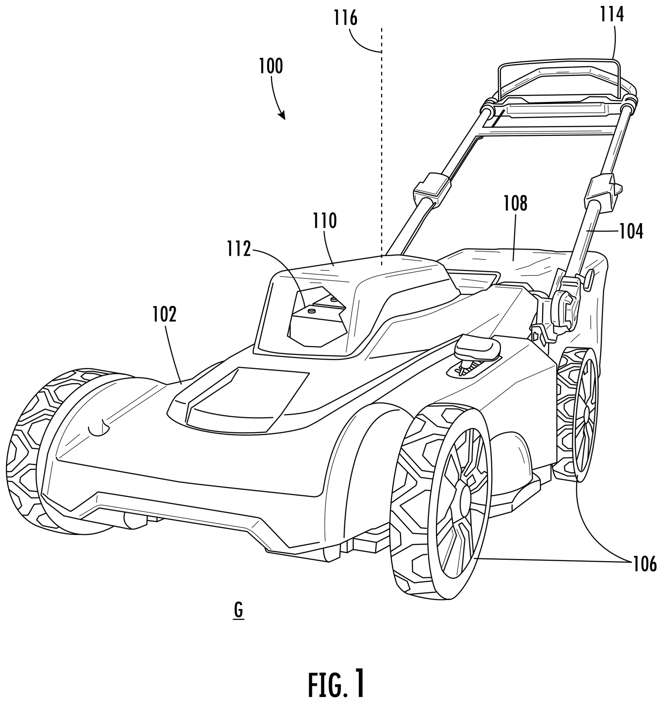

Referring now to the drawings, FIG. 1 illustrates a perspective view of a power tool in accordance with an example embodiment. The depicted power tool is a walk-behind lawnmower 100. The power tool may also, or alternatively, include another type of power tool, such as a riding lawnmower, a tractor, a self-propelled walk-behind lawnmower, a robotic lawnmower, a snowblower, a tiller, an edger, a powered seed spreader, an auger or cultivator, a sprayer, or the like. While reference is made hereinafter to the lawnmower 100 depicted in FIG. 1, the disclosure is not intended to be limited thereto and may be implemented with other types of power tools, including both manual (e.g., push-type) power tools and self-propelled power tools (i.e., where the power tool has a motive power source that propels the power tool to move itself). Moreover, the disclosure may be applicable to both user-operated power tools where user presence is required to operate the power tool and/or robotic power tools which can operate at least semi-autonomously with minimal or no active user intervention.

The lawnmower 100 of FIG. 1 generally includes a housing 102, a handle 104 extending from the housing 102, a walking element in the form of a plurality of wheels 106 that support the housing 102 to permit the lawnmower 100 to move over an underlying (ground) surface G, a debris container 108 in the form of a grass clippings bag coupled to the housing 102 at a location under the handle 104, a power storage receiving compartment 110 in the form of a battery compartment which receives one or more batteries 112, and a control implement 114 to affect operational control of the lawnmower 100 by a user. The control implement 114 may be positioned at the handle 104 to allow the user to easily operate one or more working implements of the lawnmower 100.

The housing 102 at least partially surrounds a working implement, such as a cutting blade, driven by a working implement motor. The working implement motor is supported by the housing (or a framework of the lawnmower 100) and drives the working implement to perform a working operation. For example, the working implement motor can include a brushed or brushless direct current (DC) motor with an output shaft operably coupled to one or more blades. The working implement motor can drive the one or more blades to move such that cutting surface(s) of the one or more blades cut grass and/or other underlying debris into small pieces which may be optionally collected in the debris container 108. In some implementations, the height of cut of the blade(s) can be adjusted by the user, e.g., at a height of cut adjustment interface. In this regard, the user can raise and lower the height of cut to achieve a desirable lawn height.

The handle 104 extends from the housing 102 in a rearward direction, permitting a user to control (e.g., steer and/or push) the lawnmower 100 over the underlying surface G. The handle 104 may be adjustable, allowing the user to change, for example, a length of the handle 104, an angular orientation of the handle 104 with respect to the housing 102, a state of the handle 104 (e.g., between an in-use configuration and a stored configuration), or any combination thereof. The handle 104 can define one or more grips 116 which are engageable by the user to affect control of the handle 104. The grip(s) 116 can be disposed at an upper part of the handle 104, such as near the control implement 114. The control implement 114 can include, for example, a presence detector (sometimes referred to as a bail) which selectively permits the working implement motor to operate based on user presence. For example, the presence detector can be self-biased to a neutral state indicating the user is not present at the handle 104. With the presence detector in the neutral state, the working implement motor is prevented from operating. When the user moves the presence detector to a modified state, such as by pulling the presence detector towards the grip(s) 116, the working implement motor is permitted to operate. In other implementations, the control implement 114 can further include other types of control instruments which may be activated by the user to adjust an operational condition of the lawnmower 100. Example control instruments include a speed-setting interface (such as a toggle, a slide, or a paddle) for adjusting a speed of the wheels 106 in the case of driven wheel(s) 106, an eco-mode and/or overdrive/boost selector (such as a button or switch) for adjusting a speed of the working implement motor, an auxiliary controller which affects a state of an auxiliary component of the lawnmower 100 (such as one or more headlights, bagger doors, etc.), or the like. The user can adjust the position of the one or more control implements 114 based on the working operation being performed and a desired outcome.

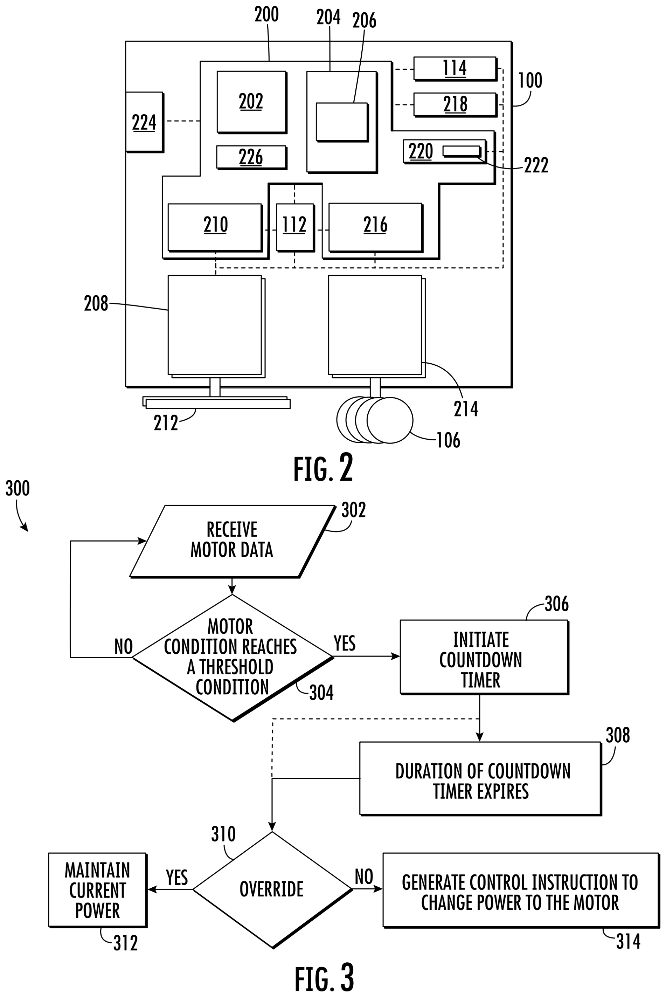

Referring to FIG. 2, the lawnmower 100 includes control circuitry 200 that implements a control scheme to affect a selected operational state of the lawnmower 100. The control circuitry 200 receives power from a power source, such as the one or more batteries 112. The control circuitry 200 includes one or more processors 202 coupled to a memory 204. The processor(s) 202 can be any suitable processing device (e.g., a control circuitry, a processor core, a microprocessor, an application specific integrated circuit, a field programmable gate array, a controller, a microcontroller, etc.) and can be one processor or a plurality of processors that are operatively connected. The memory 204 can include one or more non-transitory computer-readable storage media, such as RAM, ROM, EEPROM, EPROM, one or more memory devices, flash memory devices, etc., and combinations thereof. The memory 204 can store information that can be accessed by the processor(s) 202. For instance, the memory 204 (e.g., one or more non-transitory computer-readable storage mediums, memory devices) can include computer-readable instructions 206 that can be executed by the processor(s) 202. The instructions 206 can be software, firmware, or both written in any suitable programming language or can be implemented in firmware or hardware. Additionally, or alternatively, the instructions 206 can be executed in logically and/or virtually separate threads on processor(s) 202. For example, the memory 204 can store instructions 206 that when executed by the processor(s) 202 cause the processor(s) 202 to perform operations such as any of the operations and functions as described herein. The control circuitry 200 may include a printed circuit board (PCB) incorporating one or more components described herein interconnected by wiring, solder, and other communication protocols. While certain components are described as being part of the control circuitry 200, e.g., part of the PCB, one or more components can be part of a separate controller or include discrete architecture in communication with the control circuitry 200 through a wired or wireless interface. For instance, reference below to motor controllers is made with respect to control circuitry 200; however, the motor controllers may be separate from the PCB, instead located at the motor itself.

The control circuitry 200 can receive a signal from the control implement 114 indicative of a current state of the control implement 114. The signal can indicate, for example, user presence at the presence detector, user absence, a desired walking speed, a desired blade cutting speed, or the like. The control circuitry 200 can control a state of the working implement motor 208 in response to the signals received from the control implement 114. In some implementations, the control circuitry 200 controls the state of the working implement motor 208 through a motor controller 210. For example, the processor 202 can generate control instructions which are transmitted to the motor controller 210. The motor controller 210 may be part of the control circuitry 200 or part of a discrete (separate) control circuitry of the lawnmower 100. The motor controller 210 can adjust operation of the working implement motor 208 in view of the control instructions received from the processor 202. For example, the motor controller 210 can modulate (increase or decrease) power supplied to the working implement motor 208 from the one or more batteries 112 in view of control instructions received from the processor 202. In some implementations, the motor controller 210 includes a Proportional - Integral - Derivative (PID) controller that inputs instructions from the processor 202 and implements adjustments to the working implement motor 208 in response thereto. As the working implement motor 208 is driven to operate at one or more variable states, the working implement 212 (e.g., the cutting blade(s)) is caused to move at one or more variable speeds.

In some implementations, the working implement motor 208 includes a single working implement motor coupled to one or more cutting implements 212. Where a plurality of cutting implements 212 are driven by a single working implement motor, the cutting implements 212 can be connected together, e.g., through a belt and pulley system which allows the single working implement motor 208 to impart force to each of the cutting implements 212. In other implementations, the working implement motor 208 drives a single cutting implement 212, such as through a direct drive connection. In yet other implementations, the working implement motor 208 includes a plurality of working motors that each drive a single cutting implement 212, such as through a direct drive connection between each of the working motors and each of the cutting implements. The working implement motor(s) 208 can be driven by a single motor controller 210 or by a plurality of motor controllers 210. In some implementations, the single motor controller 210 or each of the plurality of motor controllers 210 can be part of the control circuitry 200 and receive the control signal, e.g., from the processor 202. In other implementations, the single motor controller 210 or each of the plurality of motor controllers 210 can be in communication with the control circuitry 200. The individual motor controllers 210 may communicate with one another and, optionally, adjust performance of their respective working implement motor 208 in view of the communications exchanged therebetween (i.e., between individual motor controllers 210). In some instances, the plurality of motor controllers 210 can operate in a primary-secondary configuration where one of the plurality of motor controllers 210 (i.e., a primary motor controller 210) receives the control signal from the control circuitry 200 and disseminates control instructions to other(s) of the plurality of motor controllers 210 (i.e., secondary motor controller(s) 210).

In some implementations, the control circuitry 200 may be configured to automatically adjust one or more operational states of the lawnmower 100 based on a detected condition. In this regard, the lawnmower 100 can self-adjust from a less desirable operational state (protocol) to a more desirable operational state (protocol). By way of non-limiting example, the lawnmower 100 can automatically enter a low-power mode to conserve battery power when the working implement motor 208 is subjected to light cutting conditions, such as encountered when the underlying grass is short and/or thin. The lawnmower 100 can automatically enter a high-power mode when conditions change, such as when the underlying grass becomes thicker and/or taller. In the high-power mode, the working implement motor 208 is fed greater power to prevent motor stall and provide enhanced cutting performance. In some implementations, the lawnmower 100 can further enter a boost mode, such as when conditions become too difficult for the working implement motor 208 to operate in high-power mode. In boost mode, the working implement motor 208 is fed even greater power than in the high-power mode, allowing the working implement motor 208 to generate even greater cutting performance. The user may be able to regulate the low-power, high-power, and boost mode(s) from the control implement 114. For example, the user may be able to restrict access to the low-power mode (i.e., disengage or prevent activation of low-power mode), override automatic control and manually switch between the different modes, set or adjust the modes, or the like.

Detection of the condition which causes the control circuitry 200 to adjust performance of the lawnmower 100 can occur in one or more ways. The detected condition can include, for example, motor speed and/or current draw of the working implement motor 208. The working implement motor 208 can detect motor speed or current draw using, for example, a Hall effect sensor, back electromotive force (BEMF) detection circuitry, brush current ripple detection circuitry, software algorithms inside the working implement motor, a visual sensor, a positional encoder, or the like. To achieve smooth and efficient power adjustments, the control circuitry 200 can employ a feedback loop that processes real-time data associated with the detected condition(s). The feedback loop can compare the detected condition(s) with predefined thresholds or reference values. If the feedback indicates that the working implement motor 208 is struggling (e.g., due to thick grass) based on the comparison, the control circuitry 200 can increase (e.g., incrementally) the motor power to enhance cutting efficiency. Conversely, if the grass is thin and the working implement motor 208 is expending too much power, the control circuitry 200 may reduce power to save energy. This dynamic adjustment not only improves the overall cutting performance but also enhances the longevity of the lawnmower 100 by ensuring that the working implement motor 208 operates within its optimal range, seamlessly adapting to varying grass conditions.

The user may experience the power adjustment to the working implement motor 208 as a smooth and responsive performance tailored to varying grass conditions. As the lawnmower 100 encounters different thicknesses of grass, the control circuitry 200 adjusts the power seamlessly without requiring any manual intervention. For instance, when cutting through thick, dense patches of grass, the user might observe that the working implement motor 208 sound slightly intensifies, indicating an increase in motor power. This adjustment ensures that the cutting implement(s) 212 maintain a consistent cutting speed and effectiveness, preventing stalling or bogging down. Conversely, when moving over lighter, less thick grass, the user may experience a quieter operation and a noticeable reduction in motor strain as the power is reduced to match the easier cutting conditions. This adaptive response not only provides a smoother and more efficient mowing experience but also reduces user effort by maintaining a steady cutting performance and optimizing battery consumption, ultimately leading to a more enjoyable and less labor-intensive lawn care process.

FIG. 3 depicts an example flow chart of a method 300 of self-adjusting an operational characteristic of the lawnmower in accordance with an example embodiment. In particular, FIG. 3 depicts a method 300 of adjusting power to the working implement motor 208 using the control circuitry 200 based on a detected condition of the lawnmower. More particularly, the method 300 causes the working implement motor to automatically enter a low-power mode (sometimes referred to as an eco-mode) in response to one or more detected conditions that indicate the working implement motor can perform sufficiently at a lower power. The method 300 may be applicable to controlling other operational aspects of the lawnmower and is not intended to be limited to the following example. Moreover, while the method 300 described hereinafter is affected by the control circuitry 200, in other implementations, motor control can be affected by a motor controller, by integrated motor hardware, by a separate controller or control circuitry, or the like.

The method 300 includes receiving 302 motor data. The received motor data can include, for example, current draw, voltage, power, motor speed, motor temperature, torque, position data, duty cycle, or the like. The motor data is received by control circuitry which includes a processor that analyzes the motor data. As part of analyzing the motor data, the control circuitry compares 304 one or more portions of the motor data to a threshold condition. The threshold condition can include, for example, a value set by a manufacturer, a service technician, and/or the user and stored in memory of the control circuitry. The stored value can correspond to a desired threshold at which an operational change of the lawnmower is desired. For example, the threshold condition can include a threshold motor speed and/or a threshold current draw. The stored value can include a motor speed value (such as 2500 RPM), a stored current value (such as 25 amps), or both. The control circuitry compares 304 the received motor data, and more particularly the relevant received motor data, to the stored value. As long as the received motor data indicates the working implement motor is within an acceptable range or target with respect to the stored value based on the comparison 304, the control circuitry continues to operate the working implement motor based on a current operational state.

However, in response to the comparison 304 between the received motor data and the stored value indicating a deviation, i.e., when the motor data reaches and/or exceeds the stored value, the control circuitry initiates 306 a countdown timer 226 (FIG. 2). In some instances, initiation 306 of the countdown timer occurs instantaneously in response to the comparison 304 indicating the motor data reaches the stored value (i.e., the threshold condition).

By way of example, the countdown timer can include an interval timer. The interval timer can count down a duration of time starting with a preset time value until the duration of time expires. The preset time value can include, for example, one (1) second, one and one half (1.5) seconds, two (2) seconds, two and one half (2.5) seconds, five (5) seconds, ten (10) seconds, or the like. The preset time value may be set by a manufacturer, a service technician, and/or the user and stored in memory of the control circuitry or at the countdown timer itself. In some implementations, the user may be able to adjust the preset time value either at the lawnmower 100 or by using a remote computer in communication with the lawnmower 100. Upon initiating 306 the countdown timer, the interval timer runs for a duration corresponding to the preset time value (e.g., five seconds) and notifies the control circuitry when the duration of the countdown expires (i.e., reaches zero). By way of other examples, the countdown timer can include a real-time clock (RTC) timer, a delay timer, a pulse timer, a watchdog timer, a countdown timer with multiple phases, or the like.

In some instances, the preset time value can be split into a plurality of discrete time values, including, for example, a first preset time value, a second preset time value, and one or more additional preset time values. The preset time values may be evenly spaced apart from one another. For example, the first preset time value may be one and one half (1.5) or two and one half (2.5) seconds, the second preset time value may be three (3) or four (4) seconds, and the third preset time value may be five (5) or six (6) seconds. The countdown timer may communicate expiration of each of the preset time values to the control circuitry on a real time basis.

At step 308, the countdown timer expires. Expiration of the countdown timer can include, for example, the countdown timer reaching a zero time condition, such as zero seconds. An override 310 is assessed by the control circuitry to determine whether the motor condition remained at and/or exceeded the threshold condition during the duration of the countdown timer. If the override 310 determines an override condition, such as the motor condition returning past the threshold condition to a value on the opposite side of the stored value at any time during the duration of the countdown timer, the motor is caused to maintain 312 current power. If, however, the override 310 determines a lack of overriding condition (e.g., the motor condition remained at or exceeded the threshold condition at all times during the duration of the countdown timer), the control circuitry generates 314 a control instruction to change (e.g., lower) power to the motor. The control instruction may be communicated to the motor controller associated with the working implement motor. The motor controller can modulate operation of the working implement motor in response to receiving the control instruction. Where multiple preset time values are employed, the control circuitry may provide control instructions that cause the working implement motor to more gradually change its operation. For instance, where the working implement motor is caused to exhibit an N% decrease in supplied power upon reaching the ultimate (final) preset time value, each intermediate preset time value can correspond with a gradual decrease (< N%) in supplied power. For example, the working implement motor can exhibit a first decrease in supplied power in response to the countdown timer reaching the first preset time value, a yet further decrease in power in response to the countdown timer reaching the second preset time value, and a yet further decrease in power in response to the countdown reaching the third (final) preset time value. Upon reaching the third preset time value, power supplied to the motor can be decreased by N%. The number and duration of the preset time values can change from the example described above.

In some instances, the duration of the countdown timer 308 and the override 310 are performed successively. For example, the override 310 determination occurs upon expiration of the countdown timer 308. That is, the control circuitry can store the occurrence of the override but wait until expiration of the countdown timer 308 to enact the override. In other instances, the override 310 is performed concurrently with the duration of the countdown timer 308. For example, the override 310 can terminate the countdown timer prior to the duration of the countdown timer expiring 308.

If the countdown timer expires 308 and the motor condition returned past the threshold condition to a value on the opposite side of the stored value at any time during the duration of the countdown timer, the motor is caused to remain at the current operating condition. That is, the countdown timer is overridden. However, if the countdown timer expires 308 without the motor condition returning past the threshold condition (i.e., the motor condition remains on the same side of the stored value for the entire duration of the timer countdown), the control circuitry generates a control instruction to change power to the working implement motor.

In an embodiment, the control circuitry can return the working implement motor to the original operating condition, i.e., the original power, or affect a different operating condition, e.g., a boost mode, in response to further motor data indicating the power supplied to the working implement motor is insufficient to affect the working operation. For example, where the lawnmower initially traverses a segment of grass that causes the control circuitry to affect entry into low-power mode and subsequently the lawnmower enters a segment of grass that requires additional power, the control circuitry can generate a further control signal to cause the working implement motor to enter the higher-power mode. This control signal can be instantaneous or include its own countdown timer. This process repeats based on the received motor data during the working operation. In some instances, the user can disengage and/or reengage the automatic adjustment between power settings, opting instead to manually control power regulation to the working implement motor.

Referring again to FIG. 2, in some implementations, for example, where the wheels 106 are powered (such as in the case of self-propelled lawnmowers), the control circuitry 200 can control a state of a drive motor 214 to affect rotational speed of the wheels 106. For example, the processor 202 can generate control instructions which are transmitted to a motor controller 216. The motor controller 216 can adjust operation of the drive motor 214 in view of the control instructions. For example, the motor controller 216 can modulate (increase or decrease) power supplied to the drive motor 214 from the one or more batteries 112 in view of control instructions received from the processor 202. In some implementations, the motor controller 216 includes a Proportional - Integral - Derivative (PID) controller that inputs instructions from the control circuitry 200 and implements adjustments to the drive motor 214 in response thereto. As the drive motor 214 is driven to operate at one or more variable states, the driven wheel(s) 106 are caused to move at one or more variable speeds.

In some instances, the control circuitry can cause the drive motor 214 to affect lower drive speed to the wheel(s) 106 based on the detected condition associated with the working implement motor 208. For example, where the control circuitry receives information identifying the working implement motor 208 as stalling or bogging down, the processor 202 can send a control instruction which causes the drive motor 214 to slow down, giving the working implement motor 208 additional time to perform the cutting operation.

In some implementations, the drive motor 214 includes a single drive motor coupled to one or more wheels 106. Where a plurality of wheels 106 are driven by a single drive motor, the wheels 106 can be connected together, e.g., through an axle or gearbox which allows the drive motor 214 to impart force to each of the wheels 106. In other implementations, the drive motor 214 drives a single wheel 106, such as through a direct drive connection. In yet other implementations, the drive motor 214 includes a plurality of working motors that each drive a single wheel 106, such as through a direct drive connection between each of the drive motors and each of the wheels. The drive motor(s) 214 can be driven by a single motor controller 216 or by a plurality of motor controllers 216. Each of the plurality of motor controllers 216 can be in communication with the processor 202 to receive the control signal. The individual motor controllers 216 may communicate with one another and, optionally, adjust performance of their respective drive motor 214 in view of the communications exchanged therebetween (i.e., between individual motor controllers 216).

In an embodiment, the control circuitry 200 can be in communication with a component 218 of the lawnmower 100 and control one or more operational states of the component 218. By way of non-limiting example, the component 218 can include a headlight, an auxiliary working implement (such as a side mounted edger, a side mounted string trimmer, a pressurized sprayer, a tow-behind accessory, etc.), or the like. The control circuitry 200 can generate a control signal to affect control of the component 218, e.g., in response to input received from the control implement 114.

In some implementations, the control circuitry 200 can communicate with a user through a communication terminal 224, such as a wireless communication terminal in communication with a remote computer having a user interface or a wired communication terminal in communication with a display associated with the lawnmower 100.

In an embodiment, the control circuitry 200 includes, or can be in communication with, an inertial measurement unit (IMU) 220. In some instances, the IMU 220 can communicate motion data to the processor 202 which processes the motion data to generate suitable command(s) to operate the lawnmower 100 based on the motion data supplied to the processor 202 by the IMU 220. In other instances, the IMU 220 can communicate motion data to an external or additional control circuitry (not illustrated) that is not part of the control circuitry 200. For example, the IMU 220 can communicate the motion data to a remote processor, such as a cloud server hosting a manufacturer application, a smart device (e.g., a smart phone) hosting a local controller application, or a remote controller. The external or additional control circuitry can process the motion data and generate suitable commands to operate the lawnmower 100 and communicate the commands back to the control circuitry 200. In yet other instances, the IMU 220 can at least partially, such as fully, process the motion data and generate commands which are communicated to the processor 202 to operate the lawnmower 100. For example, the IMU 220 can include an internal logic device, such as a processor coupled to memory storing instructions that, when executed by the processor, allows the IMU 220 to determine control instructions, or at least angular change information, from the motion data. In some instances, the IMU 220 may provide the processor 202 with both the raw motion data (or a portion thereof) and processed information, such as angular change information. The processor 202 may utilize the raw motion data (or portion thereof) to further implement one or more control decisions in view of the angular change information provided by the IMU 220. In some instances, the processor 202 may utilize the raw motion data (or portion thereof) to validate the angular change information (or other processed information) provided by the IMU 220.

The IMU 220 is coupled to the lawnmower 100 and moves therewith as the lawnmower 100 traverses a working environment. In some implementations, the IMU 220 is mounted to the lawnmower 100 at a location within the housing 102 (FIG. 1), protected from debris generated by movement of the working implement 212. For example, the IMU 220 can be disposed within a sealed compartment defined by the housing 102. In other implementations, the IMU 220 is mounted to the handle 104, such as within the handle 104. In yet other implementations, the IMU 220 is mounted at one or more of the wheels 106 (such as within an internal cavity defined by one of the wheels 106).

The IMU 220 measures force of movement of the lawnmower 100 by detecting various forces which are subjected on the lawnmower 100, including the absolute direction of movement, the relative direction of movement, force of movement, magnetic bearing of movement, acceleration, and rotational movement. The IMU 220 can function by using at least one accelerometer to detect a rate of acceleration or deceleration of the lawnmower 100, at least one gyroscope to detect a gyroscopic movement of the lawnmower 200 and/or a magnetometer to detect a magnetic bearing of movement of the lawnmower 100. The IMU 220 may further comprise an IMU chip 222 connected to a power supply, such as the one or more batteries 112. In some embodiments, the IMU 220 contains only a single-axis gyroscope or angle sensor to detect movement of the lawnmower 200 about a single axis and output detected movement as a data to determine whether to override the countdown timer, as explained below. In some embodiments, an accelerometer and/or gyroscope may be included outside the IMU 220. The accelerometer and/or gyroscope can communicate motion data to the processor 202 or another onboard or external control circuitry that affects control of the lawnmower 100 based on the motion data.

As the IMU 220 may detect at least the acceleration and/or gyroscopic movements of the lawnmower 100, it may be required to undergo calibration after shipping such that it can be calibrated for its full range of movement. The user can calibrate the IMU 220 by moving it in all three dimensions, such as by shaking or moving the IMU 220 in their hand (i.e., in the case where the IMU 220 is removable from the lawnmower 100) or by moving the entire lawnmower 100. As an example, as part of an initialization process a user may be required to calibrate the IMU 220. A user would move the IMU 220, e.g., in a "figure of 8" pattern, in order to give the accelerometer and gyroscope components of the IMU 220 a varied range of accelerations and gyroscopic motions to detect and record.

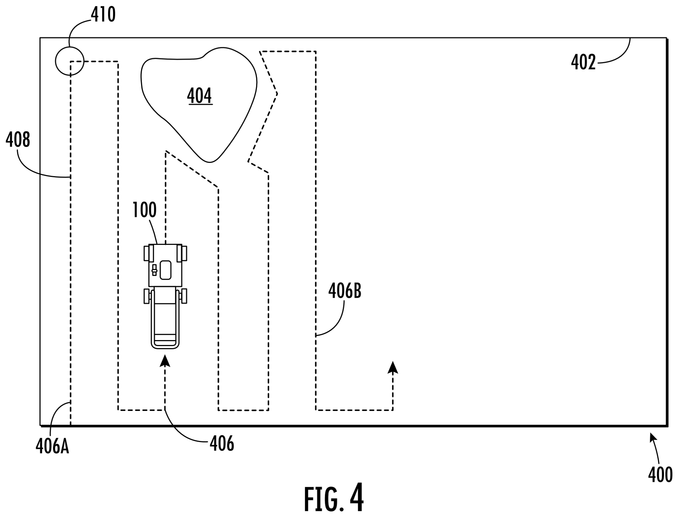

FIG. 4 illustrates a top view of an example working environment 400 in which the lawnmower 100 may be deployed. The working environment 400 can include, for example, a residential backyard with one or more boundaries defined, for example, by a fenced outer boundary 402, one or more shrubs or trees 404, or the like. The lawnmower 100 is moved throughout the working environment 400 with the cutting implement activated. Typically, though not always, the lawnmower 100 is moved in a predictable pattern, such as adjacent rows or a spiral shape, to ensure the entire working environment 400 is covered. The lawnmower 100 traverses the working environment 400 along a path 406 as navigated by the user (or, in the case of a robotic lawnmower, a preset or semi-random path). FIG. 4 depicts a portion 406A of the path 406 where the lawnmower 100 has previously travelled and a portion 406B of the path 406 where the lawnmower 100 will subsequently travel. The portion 406B of the path 406 is shown as an example for reference. In the instance where the lawnmower 100 is operated by a user (i.e., not a robotic lawnmower), the portion 406B of the path 406 where the lawnmower 100 will subsequently travel may not yet be defined.

As the lawnmower 100 moves across the working environment 400 along the path 406, particularly when the path 406 includes adjacent rows as depicted in FIG. 4, straight (or semi-straight) cutting path segments 408 are interposed by turning locations 410 where a direction of the lawnmower 100 is sharply adjusted. Often these turning locations 410 occur in tight areas where the user is not able to quickly reorient a direction of the lawnmower 100. For example, when approaching the fence 402 head on, the user typically wants to advance the cutting implement 212 as proximate to the fence 402 as possible to reduce the amount of subsequent edging required to complete the working operation. In this regard, the user allows a front edge of the lawnmower 100 to contact, or nearly contact, the fence 402. This places the cutting implements as close to the fence as possible in view of the shape and size of the housing 102. However, once contact, or near contact, with the fence 402 is made, turning the lawnmower 100 requires the user to implement a turning operation. In some instances, the user may pivot the lawnmower 100, such as about rear wheels 106 (FIG. 1), by pushing down on the handle 104 to raise the front wheels 106 off the ground and then rotating the lawnmower 100 about a vertical axis to orient the lawnmower 100 to a new direction. The user may also, or alternatively, be required to temporarily reverse the lawnmower 100, for example, by pulling the lawnmower 100 by the handle 104 in a rearward direction. After retracing rearward by a sufficient distance, the user may then control the lawnmower 100 to resume the forward working operation. This turning operation is repeated multiple times based on the shape and size of the working environment 100.

As described above, the control circuitry 200 is configured to affect an operational state of the working implement motor 208 (FIG. 2) in response to a detected condition, such as a light cutting condition. For example, the working implement motor 208 is caused to enter a low-power mode when low current draw of the working implement motor 208 is detected over a prescribed duration of time. This may occur, for example, when the lawnmower 100 moves slowly over the working environment 400 and/or when the underlying grass is relatively thin. Both of these conditions may frequently occur when the lawnmower 100 is at one of the turning locations 410. That is, since the lawnmower 100 has already cut the underlying grass prior to the user repositioning the lawnmower 100 in a direction of the new heading, and as a result of pivoting the lawnmower 100 onto its rear wheels to permit easier turning (resulting in the cutting implement lifting off and away from the grass), the detected condition may be reached at one or more turning locations 410. As a result, the lawnmower 100 may initiate the countdown timer 226 (FIG. 2), upon the expiration of which the control circuitry 200 is programmed to change (i.e., reduce) power to the working implement motor 208. In the case where the detected condition occurs when the user is turning the lawnmower 100, it is undesirable to affect the changed power to the working implement motor 208 as the control circuitry 200 will likely be required to subsequently increase power to the working implement motor 208 as soon as the user initiates the next straight segment of cutting. In fact, for thick grass, it may even be possible for the working implement motor 208 to stall if the power output of the working implement motor 208 is reduced immediately prior to initiating the next straight segment of cutting.

To remediate this undesirable change of state during turning operations, in addition to relying on a comparison of the motor condition to the threshold value, the control circuitry can further rely on motion data received from the IMU 220 in determining when to affect the change to the power of the working implement motor 208.

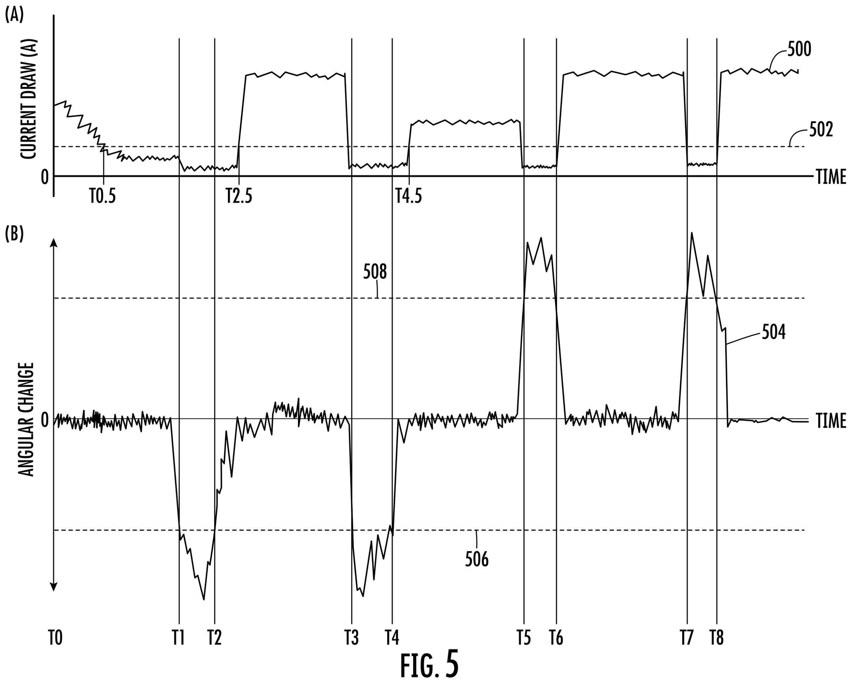

FIG. 5 illustrates (A) an example graph of current draw 500 by the working implement motor and (B) an example graph of motion data 504 detected by the IMU 220. The graphs of current draw (A) and motion data (B) are synced (aligned) by time.

Referring initially to the graph (A) of current draw, the X-axis represents units of time, such as seconds or minutes. The Y-axis represents current draw in amperes (A). The Y-axis is generally representative of the working implement motor condition being monitored for control of output power and may differ from the current draw depicted in FIG. 5. For example, instead of current draw, the Y-axis can depict motor speed.

The current draw 500 is depicted initially exceeding a condition threshold 502 during a first time interval between times T0 and T1. This may occur, for example, where cutting load is elevated as a result of thick grass. The current draw 500 then drops below the condition threshold 502 during the end of the first time interval. The current draw 500 remains less than the condition threshold 502 during a second time interval between times T1 and T2. This may occur, for example, as a result of passing over already-cut grass, thin grass, lifting of the cutting implement from a cutting plane (such as when the lawnmower is pivoted onto its rear wheels to turn), or the like. Current draw 500 again exceeds the condition threshold 502 during a third time interval between times T2 and T3. This may occur, for example, where cutting load is elevated as a result of thick grass. The current draw 500 is then less than the condition threshold 502 during a fourth time interval between times T3 and T4. This may occur, for example, as a result of passing over already-cut grass, thin grass, lifting of the cutting implement from a cutting plane (such as when the lawnmower is pivoted onto its rear wheels to turn), or the like. Current draw 500 again exceeds the condition threshold 502 during a fifth time interval between times T4 and T5. This may occur, for example, where cutting load is elevated as a result of thick grass. The current draw 500 is then less than the condition threshold 502 during a sixth time interval between times T5 and T6. This may occur, for example, as a result of passing over already-cut grass, thin grass, lifting of the cutting implement from a cutting plane (such as when the lawnmower is pivoted onto its rear wheels to turn), or the like. Current draw 500 again exceeds the condition threshold 502 during a seventh time interval between times T6 and T7. This may occur, for example, where cutting load is elevated as a result of thick grass. The current draw 500 is then less than the condition threshold 502 during an eighth time interval between times T7 and T8. This may occur, for example, as a result of passing over already-cut grass, thin grass, lifting of the cutting implement from a cutting plane (such as when the lawnmower is pivoted onto its rear wheels to turn), or the like.

As clearly evidenced above, using the current draw 500 alone (or another condition type used to determine motor control as described herein) is not sufficient to determine when the lawnmower is turning and the countdown timer should be overridden. Specifically, it is impossible to tell from the current draw 500 whether current is low as a result of thin grass or a turning condition. As such, the control circuitry is incapable of overriding the countdown timer using the current draw 500 alone without an expensive algorithmic machine learning model.

The graph (B) of angular change depicts units of time, such as seconds or minutes, along the X-axis and angular change along the Y-axis. Angular change can include change of angular position, angular velocity, angularly acceleration, or angular jerk as measured about a reference axis with a zero (0) condition occurring when the IMU 220 detects no angular change. As the lawnmower 100 undergoes angular change, e.g., the user turns the lawnmower 100 such as encountered at a turning locations 410 (FIG. 4), the motion data 504 deviates from the zero condition. The faster the user turns the lawnmower 100, the greater the absolute value shown by the motion data 504. While FIG. 5 depicts left turns as negative angular change and right turns as positive angular change, the motion data 504 may be absolute data whereby both left and right turns are both positive values.

The motion data 504 allows the control circuitry 200 to determine when the lawnmower 100 is turning. The reference axis about which the motion data 504 is captured can be fixed relative to the lawnmower 100. For example, FIG. 1 depicts the reference axis 116 oriented vertically, or generally vertically, when the lawnmower 100 is resting on a level, horizontal surface. Thus, as the lawnmower 100 turns, the motion data 504 exhibits an increased angular change value, reflected by a higher peak value. The sharper the turn, the greater the peak of the angular change value in FIG. 5.

In some implementations, threshold angular change values are stored at the control circuitry 200, such as at the memory 204. The threshold angular change values may be used by the control circuitry 200 to determine a turning override condition as described in greater detail below. FIG. 5 depicts a left angular change threshold 506 and a right angular change threshold 508. In some instances, the left and right angular change thresholds 506, 508 can have identical absolute values. That is, the value of the left angular change threshold 506 is the negative inverse of the right angular change threshold 508. Alternatively, the left and right angular change thresholds 506, 508 can have different absolute values.

In some implementations, the user is able to adjust the threshold angular change value(s), such as using a remote computer (e.g., a smartphone in wireless communication with the control circuitry 200 directly via a local communication protocol or via a cloud server connection) to affect sensitivity of the control logic described herein. For example, the user may increase the angular change threshold value(s) if a particular motion pattern is undesirably triggering an override. Alternatively, the user may decrease the angular change threshold value(s) if the override is not being triggered by user movements. In some instances, the lawnmower 100 can receive information from a machine learning model which affects that value of the angular change threshold. In other instances, the control circuitry 200 may perform learning to understand when the user desires activation of the low-power mode. For example, the control circuitry 200 can continuously monitor received data and enter a retraining mode in response to an unexpected result or condition.

Still referring to the graph (B) in FIG. 5, the angular change of the lawnmower is zero (0) during the first time interval from time T0 to T1. The first time interval may occur, for example, while the lawnmower is travelling in one of the straight cutting path segments 408 (FIG. 4) during which time the lawnmower is not subjected to lateral turning. The angular change of the lawnmower increases beyond the left angular change threshold 506 during the second time interval from time T1 to T2. The second time interval may occur, for example, while the lawnmower is travelling in the turning location 410 (FIG. 4) during which time the lawnmower is subjected to lateral turning. The angular change of the lawnmower then decreases below the left angular change threshold 506 during the third time interval from time T2 to T3. The third time interval may occur, for example, while the lawnmower is in the turning location 410 between two successive 90 degree turns. The angular change of the lawnmower then increases beyond the left angular change threshold 506 during the fourth time interval from time T3 to T4. The fourth time interval may occur, for example, while the lawnmower is travelling in the during location 410, such as while the lawnmower completes a 180-degree turn formed by the combination of turns exhibited during the second and fourth intervals. The angular change of the lawnmower is again zero during the fifth time interval from T4 to T5. The fifth time interval may occur, for example, while the lawnmower is travelling in one of the straight cutting path segments 408 during which time the lawnmower is not subjected to lateral turning. The angular change of the lawnmower increases beyond the right angular change threshold 508 during the sixth time interval from time T5 to T6. The sixth time interval may occur, for example, while the lawnmower is travelling in a subsequent turning location 410 during which time the lawnmower is subjected to lateral turning. The angular change of the lawnmower then decreases below the right angular change threshold 508 during the seventh time interval from time T6 to T7. The seventh time interval may occur for example, while the lawnmower is in the turning location 410 between two successive 90 degree turns. The angular change of the lawnmower then increases beyond the right angular change threshold 508 during the eighth time interval from time T7 to T8. The eighth time interval may occur, for example, while the lawnmower is travelling in the during location 410, such as while the lawnmower completes a 180-degree turn formed by the combination of turns exhibited during the sixth and eighth intervals.

Combining the current draw 500 depicted in graph (A) with the motion data 504 depicted in graph (B), the control circuitry can optimize performance to self-configure into a low-power mode in the event of low-power conditions without entering low-power mode during turns.

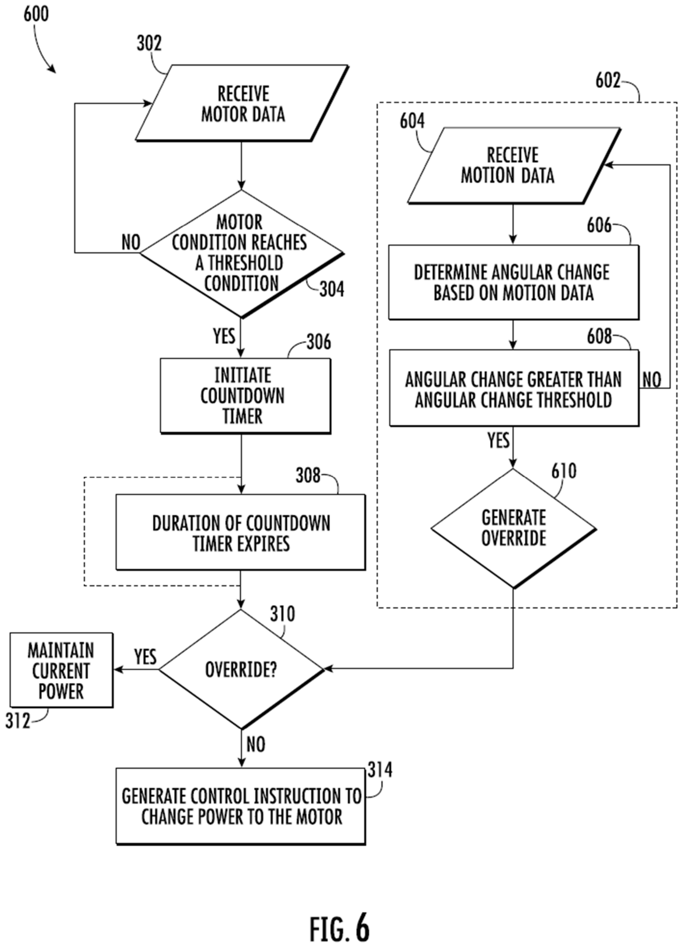

FIG. 6 depicts an example flow chart of a method 600 of self-adjusting an operational characteristic of the lawnmower in accordance with an example embodiment. In particular, FIG. 6 depicts a method 600 of adjusting power to the working implement motor 208 using the control circuitry 200 based on a detected condition of the lawnmower and IMU motion data. More particularly, the method 600 causes the working implement motor to automatically enter a low-power mode (sometimes referred to as an eco-mode) in response to one or more detected conditions that indicate the working implement motor can perform sufficiently at a lower power in view of motion data. The method 600 may be applicable to controlling other operational aspects of the lawnmower and is not intended to be limited to the following example. Moreover, while the method 600 described hereinafter is affected by the control circuitry 200, in other implementations, motor control can be affected by a motor controller, by integrated motor hardware, by a separate controller or control circuitry, or the like.

Steps 302 to 314 of the method 600 can be similar, or substantially similar to those described above with respect to method 300, however, override 310 can be further decided at least in part in view of turning information as provided based on turning analysis 602. Turning analysis 602 can include receiving 604 motion data. In an embodiment, the motion data is received 604 at the processor of the control circuitry from the IMU. The motion data is processed by the processor to determine 606 angular change. In some implementations, the motion data may undergo a processing step, such as smoothing, averaging, filtering, or the like as part of determining 606 angular change. The angular change can include, for example, angular velocity, angular acceleration, angular jerk, or the like. In some instances, processing and/or determining 606 angular change can occur at the IMU. In this regard, receiving 604 the motion data at the processor can be, but need not be, omitted and the IMU instead communicates the angular change to the processor. The determined angular change is then compared 608 to an angular change threshold. The comparison 608 can be performed by the processor and/or by the IMU. If the determined angular change is less than the angular change threshold, the turning analysis 602 returns to step 604. If, however, the determined angular change is greater than or equal to the angular change threshold, an override is generated 610. The override is then input into override 310 to prevent the generation 314 of a control instruction to change power to the working implement motor.

Referring again to FIG. 5, the countdown timer may be initiated during the first time interval between time T0 and T1 at time T0.5 when the current draw 500 drops below the condition threshold 502. If the duration of time between time T0.5 and T1 is greater than the preset value of the countdown timer, the working implement motor may enter low power mode at time T0.5 + countdown timer duration. The working implement motor remains in low power mode until at least time T1. The control circuitry can be programmed to handle the second time interval between T1 and T2 in two different ways. First, the working implement motor can remain in the low power mode throughout the second time interval as a result of entering the second time interval in low power mode regardless of the detected angular change. Second, the control circuitry can raise the working implement motor to the normal operating mode in response to the angular change exceeding the left angular change threshold 506. In some instances, the selected programming for handling the second time interval can be preprogrammed into the control circuitry. In other instances, the selected programming may be adjustable between the two options by the user. In yet other instances, the control circuitry can implement a machine learning model or anticipation algorithm that predicts a future condition and adjusts between the two options based thereon. The countdown timer may be initiated at time T2 as a result of the angular change dropping below the left angular change threshold 506 and the current draw being below the condition threshold 502. If the time between time T2 and time T2.5 is greater than the preset value of the countdown timer, the working implement motor may enter low power mode at time T2.5 + countdown timer duration. The working implement motor is returned to regular operating mode at time T2.5 and remains there until at least time T4.5. The countdown timer may be initiated at time T4 as a result of the angular change dropping below the left angular change threshold 506 and the current draw being below the condition threshold 502. If the time between time T4 and time T4.5 is greater than the preset value of the countdown timer, the working implement motor may enter low power mode at time T4.5 + countdown timer duration. The working implement motor is returned to regular operating mode at time T4.5 and remains there at least until time T8.

The embodiments described herein allow a power tool to operate efficiently without incurring unnecessary rapid switching between regular operating mode and low-power mode as a result of turning. By determining when to switch between regular operating mode and low-power mode using primary data (i.e., motor condition data) and secondary data (i.e., motion data), the control circuitry is better able to determine conditions associated with when the user would want to implement low power mode and simultaneously avoid conditions associated with when the user would want to avoid implementing low power mode. The embodiments described herein permit enhanced use of the power tool and prolonged battery life without incurring the downsides of a bimodal operational scheme (i.e., only on and off settings).

Further aspects of the invention are provided by one or more of the following embodiments:
Embodiment 1. A power tool comprising: a working implement driven by a motor; an inertial measurement unit (IMU); and a control circuitry in electronic communication with the motor and the IMU, wherein the control circuitry comprises a processor coupled to a memory storing instructions which, when executed by the processor, cause the control circuitry to: receive a motor data associated with a condition of the motor; receive a motion data from the IMU; determine angular change of the power tool from the motion data; initiate a countdown timer in response to the condition of the motor reaching a condition threshold; and generate a control instruction to: maintain power to the motor upon the countdown timer reaching a prescribed value if the determined angular change is greater than an angular change threshold at any time during a duration of the countdown timer, and/or reduce power to the motor upon the countdown timer reaching the prescribed value if the determined angular change is less than the angular change threshold during an entire duration of the countdown timer.
Embodiment 2. The power tool of embodiment 1, wherein the motor data comprises a current load drawn by the motor as a result of performing a working operation.
Embodiment 3. The power tool of any one or more of embodiments 1 or 2, wherein the power tool is a lawnmower, wherein the working implement is a blade motor having an output shaft coupled to a blade, and wherein the blade motor is configured to drive the blade to rotate and perform a grass cutting operation.
Embodiment 4. The power tool of any one or more of embodiments 1 to 3, wherein the countdown timer has a duration that extends from a first time associated with initiating the countdown timer to a second time associated with the countdown timer reaching the prescribed value, and wherein the duration is less than 10 seconds.
Embodiment 5. The power tool of any one or more of embodiments 1 to 4, wherein the power tool is supported by a plurality of wheels configured to travel over an underlying surface in a traveling direction, wherein a reference axis of the power tool is oriented perpendicular to the traveling direction, and wherein determining angular change of the power tool is determined about the reference axis of the power tool.
Embodiment 6. The power tool of any one or more of embodiments 1 to 5, wherein the angular velocity threshold comprises a first angular change threshold in a first rotational direction and a second angular change threshold in a second rotational direction opposite the first rotational direction, and wherein the control circuitry compares the determined angular change to the first and second angular change thresholds prior to generating the control instruction.
Embodiment 7. The power tool of any one or more of embodiments 1 to 6, wherein the control circuitry processes the motion data prior to determining angular change of the power tool from the motion data, and wherein processing the motion data comprises a processing step selected from the group consisting of smoothing, averaging, and filtering.
Embodiment 8. A method of controlling a working implement of a power tool by control circuitry in communication with a motor driving the working implement, the method comprising: initiating, by the control circuitry, a countdown timer in response to a condition of the motor reaching a condition threshold, wherein the control circuitry is configured to generate a control instruction to change power to the motor upon the countdown timer reaching a prescribed value; receiving, at the control circuitry, motion data from an inertial measurement unit (IMU) coupled to the power tool; determining, by the control circuitry, an angular change of the power tool based on the received motion data; comparing the angular change to an angular change threshold; and overriding, by the control circuitry, the control instruction based on the comparing.
Embodiment 9. The method of embodiment 8, wherein the control circuitry overrides the control instruction to maintain a current power to the motor upon the countdown timer reaching a prescribed value if the determined angular change is greater than the angular change threshold at any time during a duration of the countdown timer.
Embodiment 10. The method of any one or more of embodiments 8 or 9, wherein initiating the countdown timer is performed in response to a current draw of the motor reaching a minimum current draw threshold, and wherein the control circuitry is configured to reduce power to the motor upon the countdown timer reaching the prescribed value.
Embodiment 11. The method of any one or more of embodiments 8 to 10, wherein initiating the countdown timer triggers a timer that extends from a first time associated with initiating the countdown timer to a second time associated with the countdown timer reaching a prescribed value, and wherein a duration is less than 10 seconds.
Embodiment 12. The method of any one or more of embodiments 8 to 11, wherein the power tool is supported by a walking element configured to travel over an underlying surface in a traveling direction, wherein a reference axis of the power tool is oriented perpendicular to the traveling direction, and wherein determining angular change of the power tool is determined by measuring angular change about the reference axis of the power tool, the angular change selected from the group consisting of angular displacement, angular velocity, angular acceleration, and angular jerk.
Embodiment 13. The method of any one or more of embodiments 8 to 12, further comprising processing, by the control circuitry or the IMU, the motion data prior to determining angular change of the power tool, and wherein processing the motion data comprises a processing step selected from the group consisting of smoothing, averaging, and filtering.
Embodiment 14. The method of any one or more of embodiments 8 to 13, further comprising adjusting, by a user via a user interface, the angular change threshold to affect a different operating performance of the power tool.
Embodiment 15. A control circuitry for a power tool, the control circuitry comprising a processor coupled to a memory storing instructions which, when executed by the processor cause the control circuitry to: receive motor data associated with a condition of a working implement motor of the power tool; receive motion data from an inertial measurement unit (IMU); determine angular change of the power tool from the motion data; initiate a countdown timer in response to the condition of the working implement motor reaching a condition threshold, wherein the control circuitry is configured to generate a control instruction to reduce power to the working implement motor upon the countdown timer reaching a prescribed value; compare the determined angular change to an angular change threshold; and override the control instruction based on the comparison.
Embodiment 16. The control circuitry of embodiment 15, wherein the control circuitry receives real-time feed of motor data from the working implement motor and a real-time feed of motion data from the IMU, and wherein the IMU comprises a gyroscope.
Embodiment 17. The control circuitry of any one or more of embodiments 15 or 16, wherein the control circuitry is configured to automatically initiate the countdown timer upon the working implement motor reaching the condition threshold, and wherein the countdown timer triggers a timer having a duration that extends from a first time associated with initiating the countdown timer to a second time associated with the countdown timer reaching a prescribed value, and wherein the duration is less than 10 seconds.
Embodiment 18. The control circuitry of any one or more of embodiments 15 to 17, further comprising re-initiating the countdown timer in response to the condition of the working implement motor again reaching the condition threshold after the control circuitry overrides the control instruction.
Embodiment 19. The control circuitry of any one or more of embodiments 15 to 18, wherein the control circuitry is disposed on the power tool and wirelessly communicates with a remote computer via a transceiver of the power tool, and wherein a user adjusts the angular change threshold via the remote computer.
Embodiment 20. The control circuitry of any one or more of embodiments 15 to 19, wherein the power tool comprises a walking element, wherein the walking element is powered by a walking motor to propel the power tool over an underlying surface, and wherein the control circuitry transmits control signals to affect a state of the walking motor.
Embodiment 21. A power tool comprising: a working implement driven by a motor; an inertial measurement unit (IMU); and a control circuitry in electronic communication with the motor and the IMU, wherein the control circuitry comprises a processor coupled to a memory storing instructions which, when executed by the processor, cause the control circuitry to: receive a motor data associated with a condition of the motor; determine angular change of the power tool from motion data received from the IMU or receive angular change data from the IMU; initiate a countdown timer in response to the condition of the motor reaching a condition threshold; and generate a control instruction to: maintain power to the motor upon the countdown timer reaching a prescribed value if the determined angular change is greater than an angular change threshold at any time during a duration of the countdown timer, and/or reduce power to the motor upon the countdown timer reaching the prescribed value if the determined angular change is less than the angular change threshold during an entire duration of the countdown timer.
Embodiment 22. A method of controlling a working implement of a power tool by control circuitry in communication with a motor driving the working implement, the method comprising: initiating, by the control circuitry, a countdown timer in response to a condition of the motor reaching a condition threshold, wherein the control circuitry is configured to generate a control instruction to change power to the motor upon the countdown timer reaching a prescribed value; determining, by the control circuitry or an inertial measurement unit (IMU) coupled to the power tool, an angular change of the power tool based on motion data captured by the IMU; comparing the angular change to an angular change threshold; and overriding, by the control circuitry, the control instruction based on the comparing.
Embodiment 23. A control circuitry for a power tool, the control circuitry comprising a processor coupled to a memory storing instructions which, when executed by the processor cause the control circuitry to: receive motor data associated with a condition of a working implement motor of the power tool; determine angular change of the power tool from motion data received from an inertial measurement unit (IMU) of the power tool or receive angular change data from the IMU; initiate a countdown timer in response to the condition of the working implement motor reaching a condition threshold, wherein the control circuitry is configured to generate a control instruction to reduce power to the working implement motor upon the countdown timer reaching a prescribed value; compare the determined angular change to an angular change threshold; and override the control instruction based on the comparison.
Embodiment 24: A power tool comprising: a working implement driven by a motor; an inertial measurement unit (IMU); and a control circuitry in electronic communication with the motor and the IMU, wherein the control circuitry comprises a processor coupled to a memory storing instructions which, when executed by the processor, cause the control circuitry to: receive a motor data associated with a condition of the motor; determine angular change of the power tool from motion data received from the IMU or receive angular change data from the IMU; initiate a countdown timer in response to the condition of the motor reaching a condition threshold; and generate a control instruction to: maintain power to the motor upon the countdown timer reaching a prescribed value if the determined angular change is greater than an angular change threshold at any time during a duration of the countdown timer, and reduce power to the motor upon the countdown timer reaching the prescribed value if the determined angular change is less than the angular change threshold during an entire duration of the countdown timer.
Embodiment 25: The power tool of Embodiment 24:, wherein the motor data comprises a current load drawn by the motor as a result of performing a working operation.
Embodiment 26: The power tool of Embodiment 24 or 25, wherein the power tool is a lawnmower, wherein the working implement is a blade motor having an output shaft coupled to a blade, and wherein the blade motor is configured to drive the blade to rotate and perform a grass cutting operation.
Embodiment 27: The power tool of any one or more of the Embodiments 24 to 26, wherein the countdown timer has a duration that extends from a first time associated with initiating the countdown timer to a second time associated with the countdown timer reaching the prescribed value, and wherein the duration is less than 10 seconds.
Embodiment 28: The power tool of any one or more of the Embodiments 24 to 27, wherein the power tool is supported by a plurality of wheels configured to travel over an underlying surface in a traveling direction, wherein a reference axis of the power tool is oriented perpendicular to the traveling direction, and wherein determining angular change of the power tool is determined about the reference axis of the power tool.
Embodiment 29: The power tool of any one or more of the Embodiments 24 to 28, wherein the angular velocity threshold comprises a first angular change threshold in a first rotational direction and a second angular change threshold in a second rotational direction opposite the first rotational direction, and wherein the control circuitry compares the determined angular change to the first and second angular change thresholds prior to generating the control instruction.
Embodiment 30: The power tool of any one or more of the Embodiments 24 to 29, wherein the control circuitry processes the motion data prior to determining angular change of the power tool from the motion data, and wherein processing the motion data comprises a processing step selected from the group consisting of smoothing, averaging, and filtering.
Embodiment 31:A method of controlling a working implement of a power tool by control circuitry in communication with a motor driving the working implement, the method comprising: initiating, by the control circuitry, a countdown timer in response to a condition of the motor reaching a condition threshold, wherein the control circuitry is configured to generate a control instruction to change power to the motor upon the countdown timer reaching a prescribed value; determining, by the control circuitry or an inertial measurement unit (IMU) coupled to the power tool, an angular change of the power tool based on motion data captured by the IMU; comparing the angular change to an angular change threshold; and overriding, by the control circuitry, the control instruction based on the comparing.
Embodiment 32: The method of Embodiment 31, wherein the control circuitry overrides the control instruction to maintain a current power to the motor upon the countdown timer reaching a prescribed value if the determined angular change is greater than the angular change threshold at any time during a duration of the countdown timer.
Embodiment 33: The method of Embodiment 31 or 32, wherein initiating the countdown timer is performed in response to a current draw of the motor reaching a minimum current draw threshold, and wherein the control circuitry is configured to reduce power to the motor upon the countdown timer reaching the prescribed value.
Embodiment 34: The method of any one or more of the Embodiments 31 to 33, wherein initiating the countdown timer triggers a timer that extends from a first time associated with initiating the countdown timer to a second time associated with the countdown timer reaching a prescribed value, and wherein a duration is less than 10 seconds.
Embodiment 35:The method of any one or more of the Embodiments 31 to 34, wherein the power tool is supported by a walking element configured to travel over an underlying surface in a traveling direction, wherein a reference axis of the power tool is oriented perpendicular to the traveling direction, and wherein determining angular change of the power tool is determined by measuring angular change about the reference axis of the power tool, the angular change selected from the group consisting of angular displacement, angular velocity, angular acceleration, and angular jerk.
Embodiment 36: The method of any one or more of the Embodiments 31 to 35, further comprising processing, by the control circuitry or the IMU, the motion data prior to determining angular change of the power tool, and wherein processing the motion data comprises a processing step selected from the group consisting of smoothing, averaging, and filtering.
Embodiment 37: The method of any one or more of the Embodiments 31 to 36, further comprising adjusting, by a user via a user interface, the angular change threshold to affect a different operating performance of the power tool.
Embodiment 38: A control circuitry for a power tool, the control circuitry comprising a processor coupled to a memory storing instructions which, when executed by the processor cause the control circuitry to: receive motor data associated with a condition of a working implement motor of the power tool; determine angular change of the power tool from motion data received from an inertial measurement unit (IMU) of the power tool or receive angular change data from the IMU; initiate a countdown timer in response to the condition of the working implement motor reaching a condition threshold, wherein the control circuitry is configured to generate a control instruction to reduce power to the working implement motor upon the countdown timer reaching a prescribed value; compare the determined angular change to an angular change threshold; and override the control instruction based on the comparison.
Embodiment 39: The control circuitry of Embodiments 38, wherein the control circuitry receives a real-time feed of motor data from the working implement motor and a real-time feed of motion data from the IMU, and wherein the IMU comprises a gyroscope.
Embodiment 40: The control circuitry of Embodiment 38 or 39, wherein the control circuitry is configured to automatically initiate the countdown timer upon the working implement motor reaching the condition threshold, and wherein the countdown timer triggers a timer having a duration that extends from a first time associated with initiating the countdown timer to a second time associated with the countdown timer reaching a prescribed value, and wherein the duration is less than 10 seconds.
Embodiment 41: The control circuitry of any one or more of the Embodiments 38 to 40, further comprising re-initiating the countdown timer in response to the condition of the working implement motor again reaching the condition threshold after the control circuitry overrides the control instruction.
Embodiment 42: The control circuitry of any one or more of the Embodiments 38 to 41, wherein the control circuitry is disposed on the power tool and wirelessly communicates with a remote computer via a transceiver of the power tool, and wherein a user adjusts the angular change threshold via the remote computer.
Embodiment 43: The control circuitry of any one or more of the Embodiments 38 to 42, wherein the power tool comprises a walking element, wherein the walking element is powered by a walking motor to propel the power tool over an underlying surface, and wherein the control circuitry transmits control signals to affect a state of the walking motor.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A power tool comprising:
a working implement driven by a motor;
an inertial motion unit (IMU); and
a control circuitry in electronic communication with the motor and the IMU, wherein the control circuitry comprises a processor coupled to a memory storing instructions which, when executed by the processor, cause the control circuitry to:
receive motor data associated with a condition of the motor;
determine angular change of the power tool from motion data received from the IMU or receive angular change data from the IMU;
initiate a countdown timer in response to the condition of the motor reaching a condition threshold; and
generate a control instruction to:
maintain power to the motor upon the countdown timer reaching a prescribed value if the angular change is greater than an angular change threshold at any time during a duration of the countdown timer, and
reduce power to the motor upon the countdown timer reaching the prescribed value if the angular change is less than the angular change threshold during an entire duration of the countdown timer.

2. The power tool of claim 1, wherein the motor data comprises a current load drawn by the motor as a result of performing a working operation.

3. The power tool of claim 1 or 2, wherein the power tool is a lawnmower, wherein the working implement is a blade motor having an output shaft coupled to a blade, and wherein the blade motor is configured to drive the blade to rotate to perform a grass cutting operation.

4. The power tool of any one of the previous claims, wherein the countdown timer has a duration that extends from a first time associated with initiating the countdown timer to a second time associated with the countdown timer reaching the prescribed value, and wherein the duration is less than 10 seconds.

5. The power tool of any one of the previous claims, wherein the power tool is supported by a plurality of wheels configured to travel over an underlying surface in a traveling direction, wherein a reference axis of the power tool is oriented perpendicular to the traveling direction, and wherein determining angular change of the power tool is determined about the reference axis of the power tool.

6. The power tool of any one of the previous claims, wherein the angular change threshold comprises a first angular change threshold in a first rotational direction and a second angular change threshold in a second rotational direction opposite the first rotational direction, and wherein the control circuitry compares the determined angular change to the first and second angular change thresholds prior to generating the control instruction.

7. The power tool of any one of the previous claims, wherein the control circuitry processes the motion data prior to determining angular change of the power tool from the motion data, and wherein processing the motion data comprises a processing step selected from the group consisting of smoothing, averaging, and filtering.

8. The power tool of any one of the previous claims, wherein receiving the motor data comprises receiving a real-time feed of motor data from the motor.

9. A method of controlling a working implement of a power tool by control circuitry in communication with a motor driving the working implement, the method comprising:
initiating, by the control circuitry, a countdown timer in response to a condition of the motor reaching a condition threshold, wherein the control circuitry is configured to generate a control instruction to change power to the motor upon the countdown timer reaching a prescribed value;
determining, by the control circuitry or an inertial motion unit (IMU) coupled to the power tool, an angular change of the power tool based on motion data captured by the IMU;
comparing the angular change to an angular change threshold; and
overriding, by the control circuitry, the control instruction based on the comparing.

10. The method of claim 9, wherein the control circuitry overrides the control instruction to maintain a current power to the motor upon the countdown timer reaching a prescribed value if the angular change is greater than the angular change threshold at any time during a duration of the countdown timer.

11. The method of claim 9 or 10, wherein initiating the countdown timer is performed in response to a current draw of the motor reaching a minimum current draw threshold, and wherein the control circuitry is configured to reduce power to the motor upon the countdown timer reaching the prescribed value.

12. The method of any one of the previous claims 9 to 11, wherein initiating the countdown timer triggers a timer that extends from a first time associated with initiating the countdown timer to a second time associated with the countdown timer reaching a prescribed value, and wherein a duration is less than 10 seconds.

13. The method of any one of the previous claims 9 to 12, wherein the power tool is supported by a walking element configured to travel over an underlying surface in a traveling direction, wherein a reference axis of the power tool is oriented perpendicular to the traveling direction, and wherein determining angular change of the power tool is determined by measuring angular change about the reference axis of the power tool, the angular change selected from the group consisting of angular displacement, angular velocity, angular acceleration, and angular jerk.

14. The method of any one of the previous claims 9 to 13, further comprising processing, by the control circuitry or the IMU, the motion data prior to determining angular change of the power tool, and wherein processing the motion data comprises a processing step selected from the group consisting of smoothing, averaging, and filtering.

15. The method of any one of the previous claims 9 to 14, further comprising adjusting, by a user via a user interface, the angular change threshold to affect a different operating performance of the power tool.
